Europäisches Patentamt

(19) European Patent Office                    (11) Numéro de publication: **0 022 715**
                                                                   **B1**
Office européen des brevets

(12)                    **FASCICULE DE BREVET EUROPEEN**

(45) Date de publication du fascicule du brevet:    (51) Int. Cl.³: **B 60 J 7/04,** B 60 J 7/18
23.03.83

(21) Numéro de dépôt: **80401037.9**

(22) Date de dépôt: **09.07.80**

(54) **Dispositif de commande d'ouverture et de fermeture d'un toit ouvrant.**

(30) Priorité: **16.07.79  FR 7918363**              (73) Titulaire: **AUTOMOBILES PEUGEOT, 75, avenue de la Grande Armée, F-75116 Paris (FR)**

(43) Date de publication de la demande:
**21.01.81 Bulletin 81/3**                        (72) Inventeur: **Wasniowski, Jean-Pierre, 24, avenue des Fontaines, F-78920 Ecquevilly (FR)**

(45) Mention de la délivrance du brevet:
**23.03.83 Bulletin 83/12**                       (74) Mandataire: **Durand, Yves Armand Louis et al, Cabinet Z. Weinstein 20, Avenue de Friedland, F-75008 Paris (FR)**

(84) Etats contractants désignés:
**AT DE GB IT NL SE**

(56) Documents cités:
**DE-A-1 152 902**
**FR-A-1 416 170**
**GB-A-1 438 019**

Dispositif de commande d'ouverture et de fermeture d'un toit ouvrant

La présente invention se rapporte d'une manière générale à l'ouverture et à la fermeture d'un panneau mobile et concerne plus particulièrement un dispositif de commande d'ouverture et de fermeture d'un toit ouvrant de véhicule automobile.

On connaît déjà des toits ouvrants de véhicule constitués par un panneau mobile qui est guidé latéralement dans des bordures de la partie fixe du toit. Ainsi, lorsque le panneau mobile est commandé par le conducteur, il passe sous la partie fixe du toit pour dégager une ouverture, et lorsque ce panneau mobile est actionné dans le sens invense, il obture ou ferme cette ouverture. Toutefois, à la fermeture du panneau mobile, il est nécessaire que celui-ci soit soulevé pour rattraper le niveau de la partie fixe du toit. Inversement, lorsque le panneau mobile est ouvert, au moins sa partie arrière doit être abaissée pour pouvoir passer sous la partie fixe du toit.

Un certain nombre de moyens ont déjà été proposés pour assurer toutes les fonctions ci-dessus. C'est ainsi qu'il est déjà connu notamment du brevet FR-A-1 416 170 de prévoir un moteur, électrique ou manuel, solidaire du panneau mobile pour faire prendre à celui-ci une position d'ouverture ou de fermeture, ledit moteur entraînant, par l'intermédiaire d'une transmission, des pignons disposés de chaque côté du panneau mobile et engrenant respectivement sur des crémaillères fixées latéralement sur la partie fixe du toit. Ainsi, lorsqu'on met par exemple le moteur électrique en marche, les pignons, en réagissant sur les crémaillères, permettront le déplacement longitudinal dans un sens ou dans l'autre du panneau mobile par rapport à la partie fixe du toit.

Par ailleurs, comme il a été indiqué ci-dessus, pour soulever le panneau mobile en fin de fermeture et pour l'abaisser en début d'ouverture, il est déjà connu de prévoir un système à rampes qui coopèrent pour assurer le déplacement vertical relatif du panneau mobile par rapport à la partie fixe du toit.

Ainsi le brevet DE-A-1 152 902 décrit un système d'ouverture et de fermeture d'un toit ouvrant comprenant notamment une rampe solidaire de la partie fixe du toit et coopérant avec une autre rampe en bout d'une tige coulissante solidaire du panneau ouvrant et actionnée par une vis sans fin.

Toutefois, les systèmes antérieurs précités ne permettaient pas la commande directe et précise du soulèvement et de l'abaissement du panneau ouvrant par une pièce unique, à savoir une crémaillère temporairement déverrouillée et mobile, portant une rampe à l'une de ses extrémités.

La présente invention atteint ce but en proposant un nouveau dispositif de commande d'ouverture et de fermeture d'un panneau mobile de toit ouvrant dont l'agencement est particulièrement simple, fiable et économique tant sur le plan technologique que sur celui du coût de fabrication.

A cet effet, l'invention a pour objet un dispositif de commande d'ouverture et de fermeture d'un panneau mobile formant par exemple toit ouvrant d'un véhicule automobile, et du type comprenant au moins une crémaillère solidaire de la partie fixe du toit et sur laquelle engrènent des moyens d'entraînement en translation du panneau mobile par rapport à ladite partie fixe, ainsi qu'une ou plusieurs rampes coopérant avec des galets, patins ou analogues pour permettre le soulèvement et l'abaissement du panneau mobile respectivement à l'ouverture et à la fermeture du toit, caractérisé en ce que ladite crémaillère portant ladite rampe est montée longitudinalement mobile sur la partie fixe du toit par l'intermédiaire de lumières oblongues ménagées dans la crémaillère et dans lesquelles passent des ergots ou analogues solidaires de la partie fixe, et est temporairement verrouillée sur ladite partie fixe par l'intermédiaire d'un cliquet ou analogue asservi à une position extrême du panneau mobile.

Ainsi, selon l'invention, on prévoit une crémaillère temporairement mobile assurant à elle seule la double fonction de déplacement longitudinal du panneau mobile, et de déplacement vertical de celui-ci par rapport à la partie fixe du toit. En d'autres termes, pour soulever ou abaisser le panneau mobile, on tire avantage de l'existence de la crémaillère elle-même et du moteur qui non seulement servent à ouvrir ou fermer le panneau mobile, mais permettent également le déplacement vertical de celui-ci par le fait que le moteur actionne ladite crémaillère qui a été temporairement et automatiquement déverrouillée en fin de course du panneau mobile.

L'invention vise également un autre mode de réalisation de dispositif de commande d'ouverture et de fermeture d'un panneau mobile formant par exemple toit ouvrant d'un véhicule automobile et du type comprenant au moins une crémaillère solidaire de la partie fixe du toit et sur laquelle engrènent des moyens d'entraînement en translation du panneau mobile par rapport à ladite partie fixe, ainsi qu'au moins une rampe coopérant avec un galet, patin ou analogue pour permettre le soulèvement ou l'abaissement du panneau mobile respectivement à l'ouverture et à la fermeture du toit, caractérisé en ce que dans ladite crémaillère est montée coulissante une autre crémaillère dont la denture est en alignement avec la denture de la première crémaillère pour pouvoir engrener aussi avec lesdits moyens d'entraînement, et en ce que l'une des extrémités de ladite autre crémaillère est constamment sollicitée en position éloignée de la première crémaillère grâce à des moyens de rappel tandis que l'autre extrémité de ladite autre crémaillère porte la rampe précitée.

D'autres avantages et caractéristiques de l'invention apparaîtront mieux dans la description détaillée qui suit et se réfère aux dessins annexés, donnés uniquement à tritre d'exemple, et dans lesquels:

La figure 1 est une vue de dessus et quelque peu schémaitque d'un dispositif de commande de toit ouvrant conforme aux principes de l'invention.

La figure 2 est une vue partielle et en perspective du dispositif de la figure 1.

La figure 3 est une vue partielle et de dessus d'un autre mode de réalisation de dispositif de commande selon l'invention.

Les figures 4, 5 et 6 sont des vues de côté, suivant la flèche IV- de la figure 3, illustrant, en trois étapes successives, la fermeture du panneau mobile, dans le cas où l'on utilise le mode de réalisation de dispositif de la figure 3.

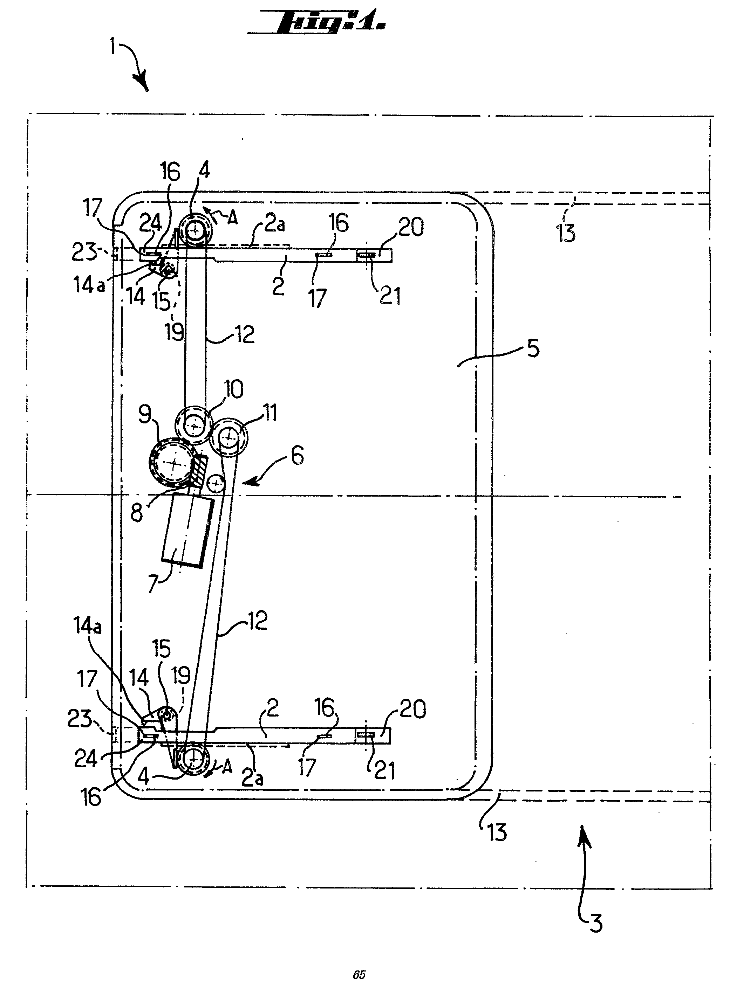

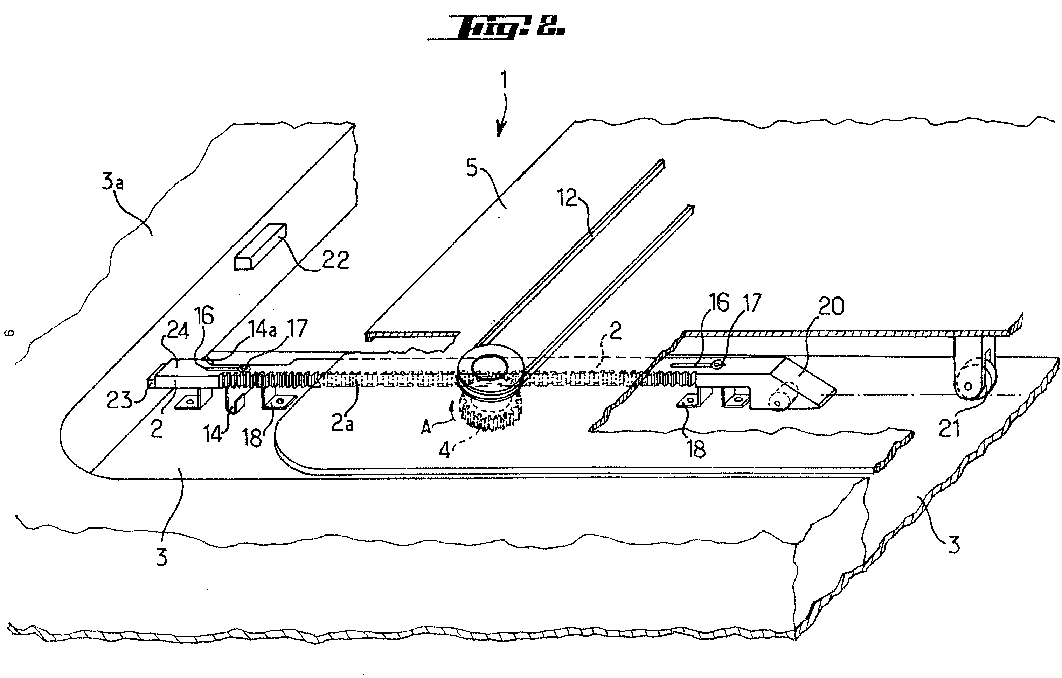

Suivant l'exemple de réalisation montré sur les figures 1 et 2, un dispositif de commande d'ouverture et de fermeture de toit ouvrant 1 conforme à l'invention comprend essentiellement deux crémaillères latérales 2 solidaires de la partie fixe 3 du toit et sur chacune desquelles engrène un pignon 4 solidaire d'un panneau mobile 5 et susceptible d'être entraîné en rotation par tout moyen approprié, mécanique ou électrique.

Sur la figure 1, on a montré à titre d'exemple un système 6 d'entraînement électrique des pignons 4, ce système étant monté sur le panneau mobile 5 et se composant d'un moteur électrique 7 dont l'arbre de sortie 8 permet l'entraînement en rotation des pignons 4 par l'intermédiaire d'une pluralité de roues dentées 9, 10 et 11, et de courroies ou analogues 12 de transmission en vue de permettre aux deux pignons 4 de tourner par exemple en sens inverse pour ainsi réagir symétriquement sur la denture 2a des crémaillères 2 et permettre le déplacement longitudinal du panneau mobile 5 qui est guidé latéralement dans des bordures, glissières ou analogues prévues sous la partie fixe 3 du toit du véhicule et montrées schématiquement en 13 sur la figure 1.

Conformément à l'invention, les crémaillères 2 sont montées longitudinalement mobiles sur la partie fixe 3 du toit et peuvent être temporairement verrouillées sur ladite partie fixe au moyen d'un cliquet ou analogue 14 monté pivotant en 15 sur la partie fixe (figure 1). Plus précisément, et comme on le voit mieux sur la figure 2, les crémaillères 2 comportent des rainures, lumières ou analogues oblongues 16 dans lesquelles passent des ergots ou doigts 17 portés par des supports 18 fixés sur la partie fixe 3 du toit ouvrant 1. Ainsi, les crémaillères 2 peuvent se déplacer par rapport à la partie fixe 3 du toit en étant guidées longitudinalement par les doigts 17. Et, comme on le voit sur la figure 1, les cliquets 14 sont munis d'un ressort 19 qui sollicite constamment la partie ou bec 14a de chaque cliquet contre la crémaillère 2 pour verrouiller celle-ci sur la partie fixe 3 du toit.

Chaque crémaillère 2 comporte à son extrémité située du côté arrière du véhicule une surface inclinée formant rampe 20 qui coopère avec un patin, galet ou analogue 21 solidaire du panneau mobile 5.

On a montré en 22 sur la figure 2 une butée élastique sur laquelle prend appui le bord transversal du panneau mobile 5 en position de fermeture, et on a montré en 23 sur les figures 1 et 2 une autre butée contre laquelle prend appui l'extrémité 24 des crémaillères 2 lorsqu'elles sont en position verrouillée.

On notera ici qu'on pourrait très bien inverser la position de la rampe 20 et du galet 21, sans sortir du cadre de l'invention. En d'autres termes, il serait tout à fait possible de prévoir le galet 21 à l'exetrémité de la crémaillère 2, et de rendre solidaire la rampe 20 du panneau mobile 5.

On comprendra mieux le rôle des organes qui ont été décrits ci-dessus à l'aide de la description du fonctionnement qui va suivre.

On·partira de la position ouverte ou entrouverte du panneau mobile 5, comme cela est représenté sur la figure 2. Les crémaillères 2 sont alors, comme on l'a vu plus haut, verrouillées sur la partie fixe 3 du toit grâce aux cliquets 14.

Si le conducteur désire fermer le panneau mobile 5, il met en route le moteur 7 qui fera tourner les pignons 4 suivant le sens approprié et matérialisé par les flèches A sur les figures 1 et 2. Les crémaillères 2 étant verrouillées, le panneau mobile 5 qui supporte le système d'entraînement 6 et les pignons 4 avance vers le bord avant 3a de la partie fixe du toit 3 jusqu'à venir comprimer la butée élastique 22. Au cours de cette phase de compression de la butée 22, les pignons 4, comme on le voit sur la figure 1, viennent simultanément en contact avec les cliquets 14 qui pivotent autour de l'axe 15 et permettent à la partie 14a de s'effacer et de déverrouiller ainsi les crémaillères 2. Celles-ci sont alors libres de se déplacer lontitudinalement en étant entraînées vers l'arrière grâce aux pignons 4 qui évidemment continuent à tourner.

En d'autres termes, le couple moteur qui reste disponible ne peut plus servir à l'avancement du panneau mobile 5 bloqué contre la butée 22, mais est utilisé pour solliciter par réaction les crémaillères 2 qui, libérées, reculent en coulissant sur les doigts 17, de façon à permettre l'engagement de la rampe 20 sous le galet 21 solidaire de l'arrière du panneau mobile 5. Dès lors, ce dernier va se soulever d'une hauteur égale à celle de la rampe 20, ce qui va permettre la mise à niveau de la partie arrière du panneau mobile 5 avec la partie fixe du toit. On obtiendra ainsi en quelque sorte une jonction bord à bord du panneau mobile avec le restant du toit.

On ajoutera ici que les moyens de guidage longitudinal 16, 17 des crémaillères 2 limitent longitudinalement le déplacement maximum de l'ensemble crémaillère-rampe vers l'arrière, de sorte que l'utilisateur peut, lorsque la manoeuvre est terminée, supprimer son action sur le contact électrique d'alimentation du moteur 7 pour l'arrêter ou bien sur un levier, si le panneau mobile 5 est équipé d'un système dèntraînement mécanique à commande manuelle. Et comme on le voit sur la figure 1, le toit ouvrant est alors fermé, les crémaillères 2 se trouvant dans leur position de recul maximum, leur extrémité 24 étant éloignée de la butée élastique 23.

L'ouverture du panneau mobile 5 est évidemment commandée en inversant le sens de rotation des pignons 4 et donc du couple, de sorte que les opérations inverses de celles décrites précédemment s'effectuent. Plus précisément, les crémaillères 2, qui sont déverrouillées comme on le voit sur la figure 1 se déplacent vers l'avant du véhicule jusqu'à ce que l'extrémité 24 prenne appui contre la butée 23. Ce faisant, le galet 21 est libéré de la rampe 20 ce qui provoque bien sûr l'abaissement de la partie arrière du panneau mobile 5 sous l'effet de son propre poids et éventuellement sous l'effet supplémentaire d'un ressort non représenté.

Lorsque l'extrémité 24 de la crémaillère prend appui sur la butée élastique 23, le cliquet 14 aura échappé aux pignons 4 de sorte que, sous l'action du ressort 19, les crémaillères 2 seront à nouveau verrouillées sur la partie fixe 3 du toit.

Dès lors, le panneau mobile 5 pourra reculer en passant sous la partie fixe du toit, puisque les crémaillères 2 étant désormais fixes, les pignons 4 communiqueront au panneau mobile 5, dont ils sont solidaires, le mouvement de translation longitudinal consécutif à la réaction des dents des pignons 4 sur lesdites crémaillères. On peut évidemment prévoir que le recul du panneau mobile jusqu'à sa position arrière extrême soit limité par une butée (non représentée) ou par un arrêt de l'intervention du conducteur du véhicule sur le contact électrique de commande du moteur ou sur un levier, s'il s'agit d'une commande manuelle.

Comme on le voit sur la figure 1, ce sont les pignons 4 qui commandent le pivotement du cliquet 14. Mais, sans sortir du cadre de l'invention, on pourrait très bien prévoir un autre organe quelconque solidaire du panneau mobile 5 et susceptible d'actionner le cliquet 14. Il faut encore noter, comme on le voit sur la figure 1, que le système d'entraînement 6 est agencé symétriquement par rappot aux pignons 4 et aux crémaillères 2, ce qui permet de ne pas créer de composantes radiales risquant d'introduire des efforts nuisibles au coulissement du panneau mobile 5 dans les glissières 13 de la partie fixe du toit 3.

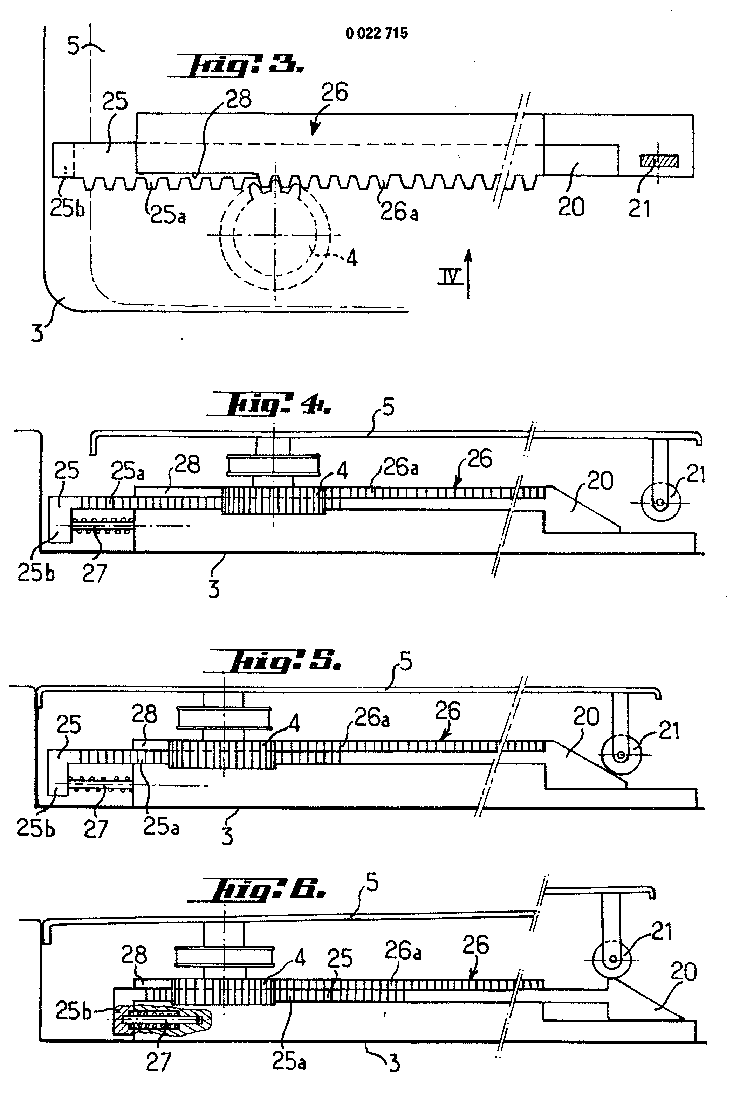

Selon un autre mode de réalisation visible sur les figures 3 à 6, chaque crémaillère constitue en fait une crémaillère double et à savoir une première crémaillère 25 montée coulissante dans une deuxième vrémaillère 26 solidaire de la partie fixe 3 du toit. La crémaillère 25 remplit exactement les mêmes fonctions que la crémaillère 2 du mode de réalisation des figures 1 et 2, en ce qu'elle porte à son extrémité située du côté arrière du véhicule une rampe 20.

La denture 25a de la crémaillère 25 est en alignement avec la denture 26a de la crémaillère 26, de façon que lesdites dentures puissent engrener l'une et l'autre avec le pignon 4, comme on le décrira plus loin à propos du fonctionnement.

Un ressort 27 est intercalé entre la crémaillère 26 et un talon 25b de la crémaillère 25 de façon à solliciter constamment en position éloignée l'une de l'autre les deux crémaillères. Ainsi, l'extrémité formant rampe 20 forme en quelque sorte une butée de retenue de la crémaillère 25 logée à coulissement dans la crémaillère 26.

Le fonctionnement du mode de réalisation qui vient d'être décrit sera maintenant brièvement expliqué en se reportant plus particulièrement aux figures 4 à 6.

Sur la crémaillère fixe 26 existe une zone 28, vers l'avant, qui est dépourvue de denture, de sorte que, lorsqu'on ferme le panneau mobile, le pignon 4 engrène tout d'abord sur la denture 26a de la crémaillère 26, et 25a de la crémaillère 25, et ledit pignon arrivant à l'extrémité de la denture 26a de la crémaillère 26, comme on le voit bien sur les figures 3 et 5, c'est la denture 25a de la crémaillère mobile 25 qui prend le relais. Plus précisément, la position de fermeture du panneau mobile 5 correspond à une position du pignon 4 en bout de la denture 26a, ce après quoi ledit pignon engrène avec la denture 25a de la crémaillère mobile 25 et oblige cette dernière à se déplacer dans la crémaillère 26 à l'encontre du ressort de rappel 27, ce qui provoque le passage de la rampe 20 sous le galet 21 et par conséquent le soulèvement du panneau mobile 5, comme cela a été expliqué à propos du mode de réalisation précédent, et comme on le voit bien sur les figures 5 et 6.

Bien entendu, les opérations inverses s'effectueront à l'ouverture du panneau mobile 5. C'est dire qu'en faisant tourner le pignon 4 en sens inverse, celui-ci libèrera tout d'abord la crémaillère mobile 25 pour abaisser le panneau 5 puis, il engrènera ensuite avec la denture 26a de la crémaillère fixe 26, ce qui conduira à l'ouverture du panneau mobile 5 auquel est, comme on l'a vu précédemment, associé ledit pignon ainsi que son système d'entraînement.

Bien entendu, l'invention n'est nullement limitée aux modes de réalisation décrits et représentés qui n'ont été donnés qu'à titre d'exemple. En particulier, elle comprend tous les moyens mis en oeuvre dans le cadre des revendications qui suivent.

## Revendications

1. Dispositif de commande d'ouverture et de fermeture d'un panneau mobile (5) formant par exemple toit ouvrant (1) d'un véhicule automobile, et du type comprenant au moins une crémaillère (2) solidaire de la partie fixe (3) du toit et sur laquelle engrènent des moyens (4) d'entraînement en translation du panneau mobile (5) par rapport à ladite partie fixe (3) ainsi qu'une ou plusieurs rampes (20) coopérant avec des galets ou patins (21) pour permettre le soulèvement et l'abaissement du panneau mobile (5) respectivement à l'ouverture et à la fermeture du toit (1), caractérisé en ce que ladite crémaillère (2) portant ladite rampe (20) est montée longitudinalement mobile sur la partie fixe (3) du toit par l'intermédiaire de lumières oblongues (16) ménagées dans la crémaillère et dans lesquelles passent des ergots (17) solidaires de la partie fixe (3), et est temporairement verrrouillée sur ladite partie fixe (3) par l'intermédiaire d'un cliquet (14) asservi à une position extrême du panneau mobile (5).

2. Dispositif de commande d'ouverture et de fermeture d'un panneau mobile (5) formant par exemple toit ouvrant d'un véhicule automobile et du type comprenant au moins une crémaillère (26) solidaire de la partie fixe (3) du toit et sur laquelle engrènent des moyens (4) d'entraînement en translation du panneau mobile par rapport à ladite partie fixe (3), ainsi qu'au moins une rampe (20) coopérant avec un galet ou patin (21) pour permettre le soulèvement et l'abaissement du panneau mobile (5) respectivement à l'ouverture et à la fermeture du toit, caractérisé en ce que dans ladite crémaillère (26) est montée coulissante une autre crémaillère (25) dont la denture (25a) est en alignement avec la denture (26a) de la crémaillère (26) pour pouvoir engrener aussi avec lesdits moyens d'entraînement (4), et en ce que l'une (25b) des extrémités de la crémaillère (25) est constamment sollicitée en position éloignée de la crémaillère (26) grâce à des moyens de rappel (27) tandis que l'autre extrémité de la crémaillère (25) porte la rampe précitée (20).

## Patentansprüche

1. Betätigungsvorrichtung zum Öffnen und Schließen einer z. B. ein Schiebedach (1) eines Kraftfahrzeugs bildenden beweglichen Platte (5) und derjenigen Bauart, die wenigstens eine starr mit dem ortsfesten Dachteil (3) verbundene Zahnstange (2), mit welcher Antriebsmittel (4) zur Verschiebung der beweglichen Platte (5) gegenüber dem ortsfesten Teil (3) im Eingriff stehen sowie eine oder mehrere mit Rollen oder Gleitkufen (21) zusammenwirkende schiefe Ebenen (20) zum Abheben und Senken der beweglichen Platte (5) jeweils beim Öffnen und beim Schließen des Daches (1), aufweist, dadurch gekennzeichnet, daß die die schiefe Ebene (20) tragende Zahnstange (2) in Längsrichtung beweglich an dem ortsfesten Dachteil (3) mittels in der Zahnstange vorgesehenen Langlöchern, in welche starr mit dem ortsfesten Teil (3) verbundene Stifte (17) eingreifen, angeordnet ist und auf diesem ortsfesten Teil (3) über eine von der Endlage der beweglichen Platte (5) steuerabhängigen Sperrklinke zeitweilig verriegelt wird.

2. Betätigungsvorrichtung zum Öffnen und Schließen einer z. B. das Schiebedach eines Kraftfahrzeugs bildenden beweglichen Deckplatte (5) und derjenigen Bauart, die wenigstens eine starr mit dem ortsfesten Dachteil (3) verbundene Zahnstange (26), mit welcher Antriebsmittel (4) zur Verschiebung der beweglichen Deckplatte in bezug auf den ortsfesten Teil (3) im Eingriff stehen, sowie wenigstens eine mit einer Rolle bzw. Gleitkufe (21) zusammenwirkende geneigte Eben zum Abheben bzw. Senken der beweglichen Deckplatte (5) jeweils beim Öffnen und beim Schließen des Daches, aufweist, dadurch gekennzeichnet, daß in der Zahnstange (26) eine weitere Zahnstange (25) gleitbar angeordnet ist, deren Zahnung (25a) mit der Zahnung (26a) der Zahnstange (26) fluchtend ausgerichtet ist, um auch mit den Antriebsmitteln (4) im Eingriff stehen zu können, und daß das eine Ende (25b) der Zahnstange (25) durch Rückstellmittel (27) stetig bestrebt ist, sich in eine von der Zahnstange (26) entfernte Stellung wegzubewegen, während das andere Ende der Zahnstange (25) die geneigte Ebene (20) trägt.

## Claims

1. A driving device for opening and closing a movable panel (5) forming for example an opening roof (1) of an automotive vehicle, of the type comprising at least one toothed rack (2) secured to the stationary portion (3) of the roof and which meshes with means (4) for driving in translation the movable panel (5) with respect to the said stationary portion (3), as well as one or several inclined surfaces (20) cooperating with rollers or skids (21) to allow raising and lowering the movable panel (5) upon opening and closing, respectively, of the roof (1), characterized in that the said toothed rack (2) provided with the said inclined surface (20) is mounted longitudinally movable on the stationary portion (3) of the roof through the medium of oblong apertures (16) provided in the toothed rack and in which extend pins (17) secured to the stationary portion (3), and is temporarily locked on the said stationary portion (3) through the medium of a pawl (14) controlled by one endmost position of the movable panel (5).

2. A driving device for opening and closing a movable panel (5) forming for example an opening roof of an automotive vehicle and of the type comprising at least one toothed rack (26) secured to the stationary portion (3) of the roof and meshing with means (4) for driving in translation the movable panel with respect to the said stationary portion (3), as well as at least one inclined surface (20) cooperating with a roller or skid (21) to allow raising and lowering the movable panel (5) upon opening and closing, respectively, of the roof, characterized in that in the said toothed rack (26) is slidingly mounted another toothed rack (25) the toothing (25a) of which is in alignment with the toothing (26a) of the toothed rack (26) so that it can mesh also with the said driving means (4), and in that one (25b) of the ends of the toothed rack (25) is constantly urged to a position apart from the toothed rack (26) owing to return means (27) whereas the other end of the toothed rack (25) is provided with the afore said inclined surface (20).

# Fig. 1.

Fig. 2.

0 022 715

Fig: 3.

Fig: 4.

Fig: 5.

Fig: 6.